# EUROPEAN PATENT SPECIFICATION

(11) **EP 4 493 889 B1**
(45) Date of publication and mention of the grant of the patent: **02.12.2026**
(21) Application number: 22715996.9
(22) Date of filing: 16.03.2022
(51) Int. Cl.: G01B 9/02015, G01B 9/02017

(54) **NON-CONTACT OPTICAL METROLOGY SYSTEM TO MEASURE SIMULTANEOUSLY THE RELATIVE PISTON AND THE RELATIVE INCLINATION IN TWO AXES (TIP AND TILT) BETWEEN TWO REFLECTIVE SURFACES**
BERÜHRUNGSLOSES OPTISCHES MESSSYSTEM ZUR GLEICHZEITIGEN MESSUNG DES RELATIVEN KOLBENS UND DER RELATIVEN NEIGUNG IN ZWEI ACHSEN (TIP UND TILT) ZWISCHEN ZWEI REFLEKTIERENDEN OBERFLÄCHEN
SYSTÈME DE MÉTROLOGIE OPTIQUE SANS CONTACT POUR MESURE SIMULTANÉE DU PISTON RELATIF ET DE L'INCLINAISON RELATIVE SELON DEUX AXES (TIP ET TILT) ENTRE DEUX SURFACES RÉFLÉCHISSANTES

(43) Date of publication of application: 22.01.2025
(73) Proprietor: Idom, S.A.U., 48015 Bilbao, Bizkaia (ES)
(72) Inventor: MURGA LLANO, Gaizka, 48015 BILBAO-BIZKAIA (ES); SANQUIRCE GARCIA, Rubén, 48015 BILBAO-BIZKAIA (ES); DIAZ CASTILLO, Alexander, 48015 BILBAO-BIZKAIA (ES); GONZALEZ JAIO, Maialen, 48015 BILBAO-BIZKAIA (ES); LARA SAEZ, Elena, 48015 BILBAO-BIZKAIA (ES); ARASA MARTI, Josep, 48015 BILBAO-BIZKAIA (ES); ROYO ROYO, Santiago, 48015 BILBAO-BIZKAIA (ES); PIZARRO BONDIA, Carles, 48015 BILBAO-BIZKAIA (ES); RODRIGO ARCAY, Noél, 48015 BILBAO-BIZKAIA (ES); SANTOS VIVES, Pau, 48015 BILBAO-BIZKAIA (ES); ROLDAN NARVION, Manuel Enrique, 48015 BILBAO-BIZKAIA (ES); CASTRO LOPEZ-TARRUELLA, Francisco Javier, 48015 BILBAO-BIZKAIA (ES)
(74) Representative: Urizar Anasagasti, Jesus Maria
(86) International application number: PCT/EP2022/056812
(87) International publication number: WO 2023/174524

(56) References cited:
- PINTÓ A ET AL: "New interferometric technique for piston measurement in segmented mirrors; New interferometric technique for piston measurement in segmented mirrors", JOURNAL OF OPTICS. A, PURE AND APPLIED OPTICS, INSTITUTE OF PHYSICS PUBLISHING, BRISTOL, GB, vol. 4, no. 6, 1 November 2002 (2002-11-01), pages S369 - S375, XP020080999, ISSN: 1464-4258, DOI: 10.1088/1464-4258/4/6/382
- PIZARRO C ET AL: "DESIGN OF AN INTERFEROMETRIC SYSTEM FOR THE MEASUREMENT OF PHASING ERRORS IN SEGMENTED MIRRORS", APPLIED OPTICS, OPTICAL SOCIETY OF AMERICA, WASHINGTON, DC, US, vol. 41, no. 22, 1 August 2002 (2002-08-01), pages 4562 - 4570, XP001131414, ISSN: 0003-6935, DOI: 10.1364/AO.41.004562
- PINTÓ AGUSTI ET AL: "Testing and applicability of the UPC-ZEBRA interferometer as a phasing system in segmented-mirror telescopes", APPLIED OPTICS, vol. 43, no. 5, 10 February 2004 (2004-02-10), US, pages 1091, XP055978767, ISSN: 0003-6935, Retrieved from the Internet <URL:https://opg.optica.org/DirectPDFAccess/80FFB16C-F2D8-4935-9EE53119AD3BEAE0_78699/ao-43-5-1091.pdf?da=1&id=78699&seq=0&mobile=no> DOI: 10.1364/AO.43.001091
- YAITSKOVA NATALIA ET AL: "Mach-Zehnder interferometer for piston and tip-tilt sensing in segmented telescopes: theory and analytical treatment", JOURNAL OF THE OPTICAL SOCIETY OF AMERICA A, vol. 22, no. 6, 1 June 2005 (2005-06-01), pages 1093, XP055978307, ISSN: 1084-7529, Retrieved from the Internet <URL:https://opg.optica.org/DirectPDFAccess/00057676-A33A-435E-B041114F4C4373F7_83984/josaa-22-6-1093.pdf?da=1&id=83984&seq=0&mobile=no> DOI: 10.1364/JOSAA.22.001093

## Description

### Technical field

The invention is encompassed within the metrology sector. More specifically, it is encompassed within optical metrology, in order to measure, without contact and simultaneously, the relative piston and the relative inclination in two axes (tip and tilt) between two low curvature reflective surfaces using partially coherent light interferometry.

This optical measurement system is particularly applicable when it comes to measuring the difference in relative height (piston) between the segments of the primary mirror of the Extremely Large Telescope (ELT) which, with 39 metres of primary mirror, will be the largest optical telescope in the world.

The proposed system creates an interference pattern using partially coherent light from a linear phase change induced by a double prism system or equivalent. The relative piston between the mirrors can be measured through the position of the interference pattern, the relative inclination in one axis (tip) through the distance between the fringes, and the relative inclination in the other axis (tilt) through the inclination of the fringes. Relative piston measurements and relative inclination measurements in two axes (tip and tilt) are decoupled and can be extracted with simple morphological operations, without the need for fringe processing algorithms.

### State of the art

Since they were invented in the 16th century, telescopes have evolved with constant increases in primary mirror diameter, as using larger primary mirrors increases both the light gathering power and the angular resolution of a telescope. Historically, an increasingly larger telescope was obtained by simply enlarging the diameter of the mirror, but as this was made from a single piece of glass, a limit was reached when mirrors larger than 8 m in aperture were needed. This dimensional barrier became unattainable basically due to the large mass required and the difficulties involved in the process of calculating and manufacturing mirrors of this size. It was for this reason that the development of segmented primary mirrors in the construction of large telescopes was carried out in the early 1980s.

A segmented mirror is composed of a number of smaller mirrors, called segments, arranged like a mosaic so that they all work together to provide image quality and aperture equivalent to a large monolithic mirror. However, segmented mirrors present a major problem in achieving proper positioning of the segments, since they must be aligned with a precision in the order of a fraction of a wavelength for telescope performance close to the diffraction limit in the visible / infrared, equivalent to a few tens of nanometres.

However, some problems arise due to segmentation, one of them being the proper relative positioning of each segment with respect to the adjacent segments, which requires in the design and construction of large ground-based telescopes an external calibration system that measures the relative misalignment of the segment, which can be corrected using a set of actuators located below each segment. There are two types of out-of-plane segment misalignments: vertical displacement (called piston) and inclinations in two axes (called tip and tilt).

Angular misalignments are usually measured with deflectometric wavefront sensors, e.g. Shack-Hartmann sensors; several techniques have also been proposed for the measurement of vertical discontinuities in pistons, among which the proposal by one of the inventors of this system that uses interferometry techniques to measure the vertical misalignment of segments (piston error) in segmented mirrors should be mentioned. This technique is based on a high-aperture Michelson interferometer that uses a broadband light spectrum, with fibre optic illumination that allows the measurement of piston error during the day with an uncertainty of 5 nm in a range of 30 µm.

The Mach-Zehnder interferometer is also well known in the state of the art. It is an instrument that makes it possible to accurately determine the relative phase change variations between two collimated light beams derived from the same light source. For this reason, this interferometer has been used, among others, to measure phase changes between the two light beams, caused by the observed sample or by a change in the length of one of the paths they travel. It is important to understand the operation of such an interferometer that when light incides on a surface, the reflected light is displaced by exactly half a wavelength if the material on the other side of the surface has a higher refractive index. If the refractive index of this material is lower, then there is no phase change in the reflected beam. And when light travels from one medium to another, there is also no phase change, but the direction of the beam changes due to refraction.

The Mach-Zehnder interferometer is a device used to take precise optical measurements. It can demonstrate interference by splitting a light beam in two and measuring the phase changes between the two beams. The basic components of the interferometer are a light source, two beam splitters, two mirrors, and two detectors. The beam splitter is often a half-silvered mirror that transmits part of the light beam and reflects the rest. Light from an illumination source, typically a laser, strikes a beam splitter, which splits the light into two beams of equal intensity, going in different directions and hitting the two mirrors. The phase of each light beam changes due to its contact with the mirror surface. The beams are recombined in the second beam splitter, and the detectors help in the study of phase differences in light paths. An alternative arrangement has the recombined beams pass through a positive lens, causing the beams to focus at a single point. If all the reflective surfaces are aligned in such a way that they are absolutely parallel, no interference fringes are produced when the beams are recombined. However, if the angles of the mirror surfaces differ even slightly, the recombined beams produce interference fringes. The interference fringe pattern produced by the Mach-Zehnder interferometer will show dark and bright lines that vary in intensity.

The challenge that the present invention proposes to overcome is to be able to measure the relative height difference (piston), as well as the relative inclination in two axes (tip and tilt), between two reflective optical surfaces such as the segments of the primary mirror that make up the ELT's main mirror, which is the centrepiece of the revolutionary astronomical machine currently being built in Chile's Atacama desert. It is an element too large to be made from a single piece of glass since it will be 39 metres in diameter and therefore will consist of 798 segments, each about 5 centimetres thick, which will measure close to 1.5 metres wide and weigh 250 kg, including the support thereof. Since the segments have to work together as a single mirror, they require specific infrastructure and control schemes. This is extremely challenging as the entire structure will be constantly moving during an observation and affected by wind and thermal changes. To achieve the required scientific performance, the mirror must be held in position and shape with a precision of tens of nanometres across its entire 39-metre diameter. Therefore, it is strictly necessary to measure the relative height difference (piston) between the segments with extreme precision.

### Description of the invention

Based on the prior art, an objective of the present invention is to provide an optical metrology system that solves a basic problem in metrology for high spatial resolution measurement of large structures with an extreme degree of precision.

In order to achieve the proposed objectives mentioned in the previous section, the invention proposes a non-contact optical metrology system to measure simultaneously the relative piston and the relative inclination in two axes (tip and tilt) between two reflective surfaces, which has the features of claim 1.

The invention proposes introducing in a Mach-Zehnder interferometer two significant changes:
- an optical element that causes a linear optical path difference (measurement tilt) in the optical beam is interposed in the target arm; and
- a compensation plate is interposed in the reference path in order to balance the two arms of the interferometer by centering the interference pattern.

The interferometer thus described fed with partially coherent light generates a fixed interference pattern modulated by an amplitude envelope, in which only the fringes close to the region in which the optical path difference in the two arms of the interferometer is zero, will be visible; so that when projecting said interference pattern in a camera, the three magnitudes measured are decoupled, so they can be extracted with simple morphological operations. These three magnitudes are represented by:
- the relative piston by the position of the envelope of the interference pattern fringe,
- the relative inclination in one axis (tip) by the separation of the fringes, and
- the relative inclination in the other axis (tilt) by the inclination of the fringes.

In a preferred embodiment, the optical component interposed in the target arm to generate the linear optical path difference (measurement tilt) is a double prism, made up of two optical glasses with different but close refractive indices depending on the resolution sought to be achieved. However, other alternative embodiments are possible, for example using a wedge prism or even generating the same optical path difference by slightly inclining one or more of the beam splitters relative to each other. In any case, either with this optical component or with the inclination of a beam splitter, an interference pattern the displacement of which is proportional to the piston displacement present in the system, between the target surface and the reference surfaces, is generated.

In this system, the measurement resolution values are a function of the degree of coherence of the light source used.

As will be explained later, the compensation plate can also adopt a stepped configuration in several different regions to introduce a constant path difference jump between said regions, in order to establish several correlative piston measurement zones in the detector, generating different measurement zones in the detector. The final result is an image with different horizontal bands along the X direction where the piston value linearly displaces the OPD=0 region and subsequently the interference pattern.

A solution to be able to measure the absolute value of inclination in two axes (tip and tilt) of the interferometer with respect to the reference surface will also be detailed later. This measure allows the interferometer to be properly aligned to avoid measurement errors induced by the inclination of the interferometer.

The most significant advantage of this configuration is that the relative piston measurement is performed without the need to perform a fringe reconstruction, but only from the position of the partial coherence interferogram in the detector. This enables fast and reliable image processing algorithms, eliminates the need for complex fringe processing, is less prone to be affected by noise, and reduces piston measurement to morphological operations on the image.

Other advantages of the proposed measurement concept include the following:
- it is self-referenced, which avoids the need for long compensation paths within the unit and allows short-range operation,
- the interferometer is capable of measuring from a single interferogram not only the relative piston between its two arms, based on the position of the modulation pattern, but also the relative inclination in two axes: tip, based on the width of the modulation pattern, and tilt, based on the inclination of the fringes-,
- relative piston and relative inclination in two axes (tip and tilt) are decoupled and can be extracted with simple morphological operations, without the need for fringe processing algorithms,
- the degree of coherence of the light can be adapted, which allows an additional degree of freedom,
- most system components could be completely commercial,
- there is no need for active or complex elements which decalibrate, add complexity or need light polarization control,
- it is based on simple and well-known building blocks that allow refinement throughout development on various parameters (source bandwidth, magnification, etc.) resulting in a flexible configuration with potential for optimization at later stages, and
- the approach is computationally simple and can take advantage of current state-of-the-art embedded computing units, which are low cost and provide more computing power than is needed for the application.

### Description of the drawings

As a complement to the description being made, and for the purpose of helping to make the features of the invention more readily understandable, the present specification is accompanied by a set of drawings which, by way of illustration and not limitation, represent the following:
Figure 1 is a schematic representation of a possible implementation of the invention.
Figures 2A and 2B show in pseudocolour the expected displacement of the fringe pattern caused by relative movement of the piston between the target and reference surfaces.

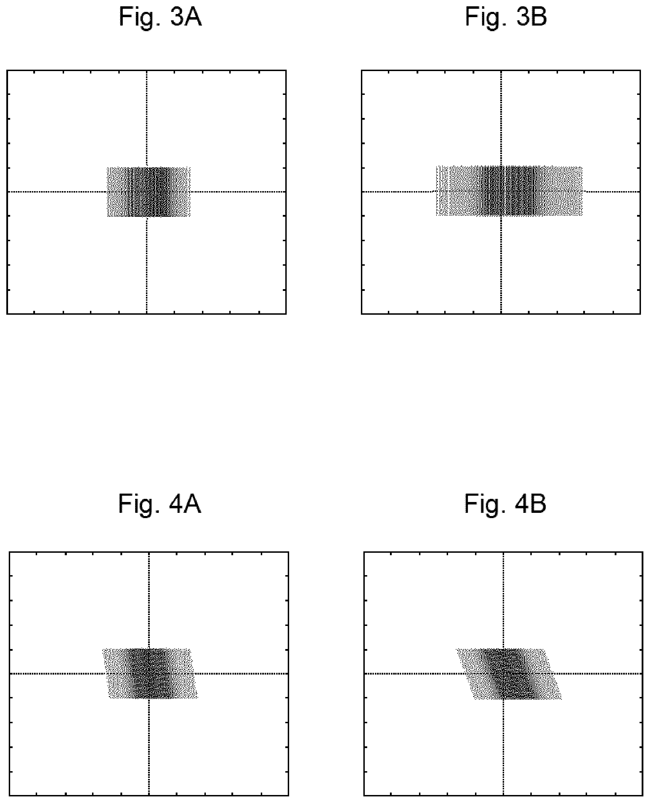

Figures 3A and 3B show in pseudocolour the expected broadening of the fringe pattern caused by a relative inclination in one axis (tip) between the target and reference surfaces.
Figures 4A and 4B show in pseudocolour the expected rotation of the fringe pattern caused by a relative inclination in the other axis (tilt) between the target and reference surfaces.
Figure 5 is a schematic diagram showing the layout of a stepped compensator plate solution to establish five correlative piston measurement zones in the detector.
Figure 6 shows the apparent piston error induced by the lack of perpendicularity between the interferometer and the reference mirror, as well as the implementation of an inclination sensor in the interferometer that provides a measure of the degree of perpendicularity in which it is located.

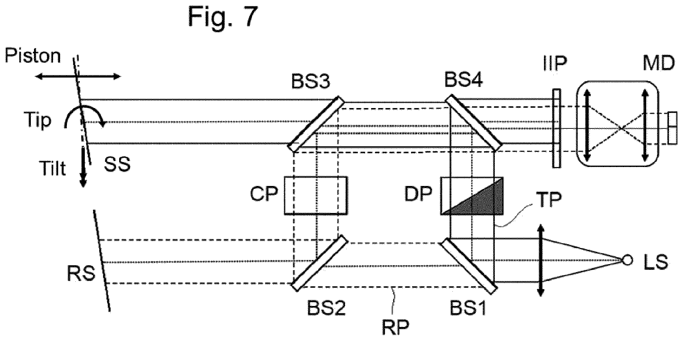

Fig. 7 represents the magnitudes: directions of the relative piston , tip and tilt, in relation to the system.

### Embodiment of the invention

As has already been indicated, a preferential implementation of the measurement system of the invention is based on the use of a modified Mach-Zehnder interferometer pointing to two adjacent almost coplanar reflective optical surfaces (RS) and (TS). As in any interferometer, this interferometer uses two light beams traveling along two different optical paths, through a system of prisms or mirrors that converge in an image plane (IIP) to form an interference pattern. In this case, a partially coherent light beam (LS) hits a first beam splitter (BS1), which splits the light into two light beams (TP, RP) going in different directions; a first light beam (RP) (represented with dashed lines) is transmitted towards a second beam splitter (BS2), aligned with the previous one, where it is also transmitted and illuminates the area of interest of the reference segment (RS). From the segment, the light is reflected back to the second beam splitter (BS2) where it is reflected towards (BS3), from where it is transmitted by (BS4) to the image capture system (MD).

Furthermore, the second beam (TP) of the same light source (represented with solid lines) is reflected by the beam splitter (BS1) towards a fourth beam splitter (BS4) and from this it is transmitted by a third beam splitter (BS3) to illuminate the target mirror segment (TS), which in turn reflects and transmits it through the beam splitters (BS3) and (BS4) to the same image capture system (MD) that captures the interference between the two beams (TP, RP).

The key modification over the classical Mach-Zehnder interferometer in the proposed system is the insertion of:
- an optical component (DP) that generates a linear optical path difference (measurement tilt) in the target arm through which the beam passes (TP), and
- a compensation plate (CP) in the reference path followed by the beam (RP), in order to balance the two arms of the interferometer by centring the interference pattern.

In a preferred embodiment, a double prism (DP) made with two optical glasses with different but close refractive indices is used in order to generate the desired optical path gradient. However, some other alternative solutions are possible for introducing that linear gradient, for example using a wedge prism or slightly inclining one or more of the beam splitters (BS1 to BS4) relative to each other.

In this way, a fixed interference pattern modulated by an amplitude envelope appears due to the use of partially coherent light, so that only the fringes close to the region in which the optical path difference in the two arms of the interferometer is zero (OPD=0) will be visible. Said interference pattern is projected onto a camera (MD) preferably mounted behind an afocal system.

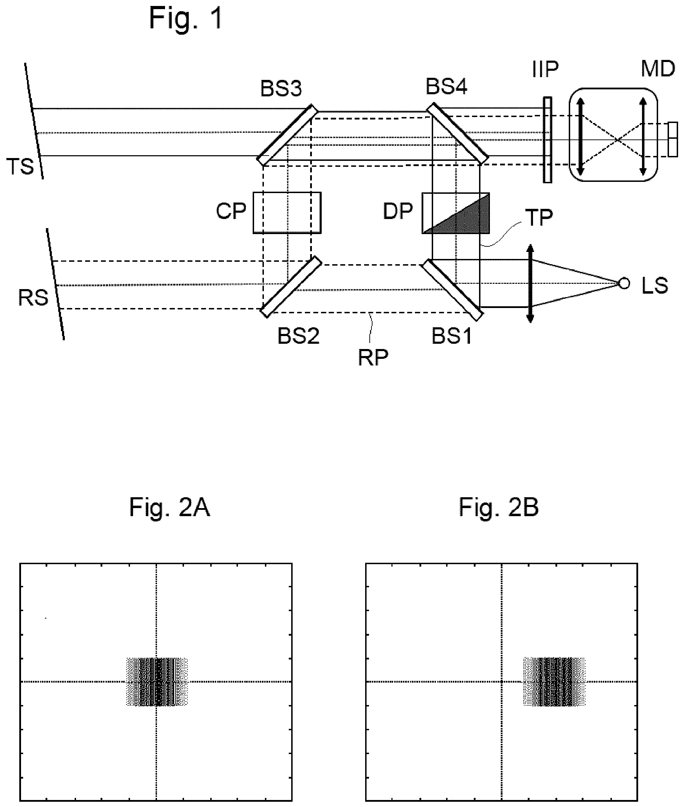

As can be seen in Figure 2B, the phase shift induced by the wave plate (DP) located in the target arm produces a displacement of the fringes proportional to the displacement of the piston present in the system, between the target and the reference surfaces.

Different measurement resolution values can be achieved by adapting the degree of coherence of the light source used.

In this measurement system the relative piston is represented by the position of the fringe envelope. The inclination in one axis (tip) is represented by the thickness of the fringes and can therefore be measured from the width of the modulation pattern. In turn, the inclination in the other axis (tilt) is represented by the inclination of the fringes. As these three magnitudes are shown decoupled, they can be extracted with simple morphological operations, without the need to use complex fringe processing algorithms.

In addition, this system is capable of measuring, from a single interferogram, not only the relative piston between its two arms, but also the relative inclination in two axes (tip and tilt).

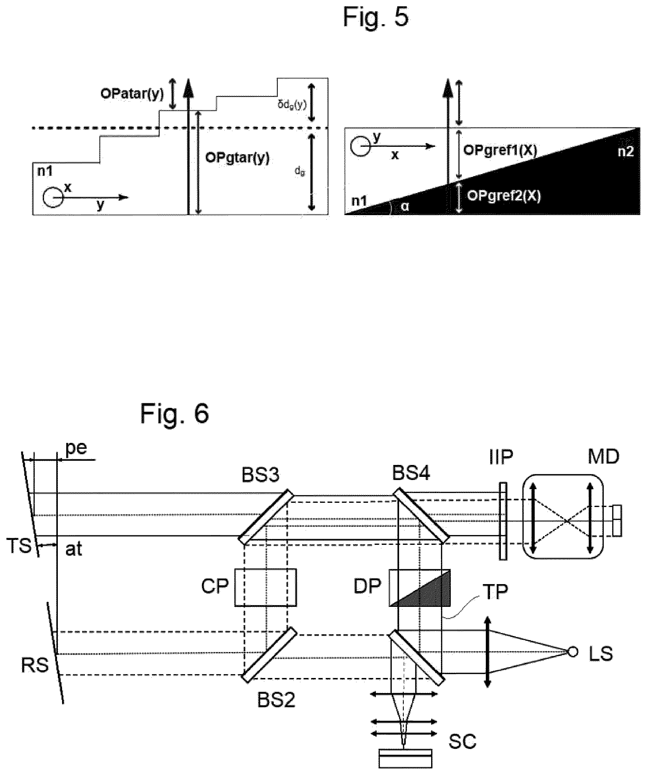

In a preferred embodiment and in order to accommodate the combination of range and resolution required in the system, the double material prism (DP) is combined with a stepped compensation plate (CP) in several different regions that introduce a constant path difference jump between them, in order to establish several correlative piston measurement zones in the detector. The measurement range can thereby be easily extended, if necessary, by using a stepped compensation plate (CP) to generate different measurement zones in the detector. (see Figure 5). The number of zones varies depending on system specifications.

In this case, depending on the number of relative piston values, fringes will be visible through one of the regions or the other, as long as the OPD = 0 position is set by the piston value being measured. The thickness *"di"* of each region is arranged in such a way that all possible piston values are visible in some region of the image. A certain amount of relative piston overlap between neighbouring regions can be allowed to ensure that no piston value is omitted due to tolerances or other reasons at the edges of the field. The final result is an image with different horizontal bands along the X direction where the piston value linearly displaces the OPD=0 region and subsequently the interference pattern.

The interferometer design can be adapted to the geometries, dimensions and positions of the detection areas on the reference and target surfaces.

The most significant advantage of this configuration is that the relative piston measurement is performed without the need to perform a fringe reconstruction, but only from the position of the partial coherence interferogram in the detector. This enables fast and reliable image processing algorithms, eliminates the need for complex fringe processing, is less prone to be affected by noise, and reduces piston measurement to morphological operations on the image.

The interferometer described in the previous lines is self-referenced, which enables several of its described measurement properties. However, the system lacks the ability to measure absolute inclination values which, if present, can lead to errors in the measurement of relative piston values. Figure 6 schematically represents the apparent piston (measurement error) induced by the lack of perpendicularity between the interferometer and the reference mirror. However, this problem, which is common to all phase measurement methods, can be easily solved by integrating a two-axis absolute inclination (tip and tilt) sensor in the proposed interferometer.

A possible solution to integrate inclination sensor in the interferometer is based on the use of the collimated light transmitted by the two beam splitters (BS1 and BS2) in front of the illumination system to the reference segment and transmitted back by the second beam splitter (BS2) and reflected in the first beam splitter (BS1) being focused on one detector per target.

Figure 6 is a schematic diagram showing the implementation of a tip inclination (SC) sensor in the interferometer, as well as a lens and an image detector that forms the red dot light, which gives us an idea of how perpendicular it is.

It is stated for the appropriate purposes that the materials, shape, size and arrangement of the elements described may be modified, as long as this does not imply an alteration of the essential features of the invention that are claimed below.

## Claims

1. A non-contact optical metrology system to measure simultaneously the relative piston and the relative inclination in two axes (tip and tilt) between two reflective surfaces based on the use of a modified Mach-Zehnder interferometer pointing to two adjacent almost coplanar mirrors (RS) and (TS), with two light beams traveling along two different optical paths until converging in an interferogram image plane (IIP) to form an interference pattern, comprising a partially coherent light beam (LS) that forms the two light beams (TP, RP) going in two different paths after hitting a first beam splitter (BS1):
- a first light beam (RP) that is transmitted towards a second beam splitter (BS2), aligned with the previous one (BS1) that illuminates the area of interest of the reference segment (RS), while another beam reflected by the reference segment (RS) is reflected in said second beam splitter (BS2) towards a third beam splitter (BS3), from where it is transmitted through a fourth beam splitter to an image capture system (MD), and
- a second light beam (TP) which is reflected by the beam splitter (BS1) towards the fourth beam splitter (BS4) and from this it is transmitted by the third beam splitter (BS3) to illuminate the target mirror segment (TS), which in turn reflects and transmits it through the beam splitters (BS3) and (BS4) to the same image capture system (MD) that captures the interference between the two beams (TP, RP);
**wherein:**
- an optical component (DP) is interposed in the target arm through which the beam (TP) passes, which creates a linear optical path difference (measurement tilt) between the two arms of the interferometer; and
- a compensation plate (CP) is interposed in the reference arm followed by the beam (RP) so that the phase gradient in the light is due solely to the change in the optical path introduced by the optical component (DP);
mechanisms that generate a fixed interference pattern modulated by an amplitude envelope, in which only the fringes close to the region in which the optical path difference in the two arms of the interferometer is zero, will be visible; when projecting said interference pattern in a camera (MD), the three magnitudes measured are decoupled, so they are extracted with simple morphological operations and represented by:
• the relative piston by the position of the envelope of the interference pattern,
• the inclination in one axis (tip) by the thickness of the fringes and can therefore be measured from the width of the modulation pattern, and
• the inclination in the other axis (tilt) by the inclination of the fringes.

2. The system according to claim 1, wherein the optical component that generates the optical path difference (DP) is a double prism, made up of two glasses with different but close refractive indices.

3. The system according to claim 1, wherein the optical component that generates the optical path difference (DP) is a wedge prism.

4. The system according to claim 1, wherein the effect of the optical component that generates the optical path difference (DP) is generated through the slight inclination of one or more of the beam splitters (BS1 to BS4).

5. The system according to any of the preceding claims, wherein the optical path difference induced by the optical component (DP) located in the target arm produces a displacement of the fringes proportional to the displacement of the piston present in the system between the target and the reference surfaces.

6. The system according to any of the preceding claims, wherein the measurement resolution values are a function of the degree of coherence of the light source used.

7. The system according to any of the preceding claims, wherein the compensation plate (CP) has a stepped configuration in several different regions that introduce a constant path difference jump between said regions, in order to establish several correlative piston measurement zones in the detector, generating different measurement zones in the detector.

8. The system according to claim 6, wherein the thickness *"di"* of each region is arranged in such a way that all possible piston values are visible in some region of the image.

9. The system according to claims 6-7, wherein there is a certain amount of relative piston overlap between neighbouring regions to ensure that no piston value is omitted due to tolerances or other reasons at the edges of the field.

10. The system according to claims 6-8, wherein the end result is an image with different horizontal bands along the X direction where the piston value linearly displaces the OPD=0 region and subsequently the interference pattern.

11. The system according to any of the preceding claims, **characterized in that** it integrates an inclination sensor (SC) in the interferometer that uses the light transmitted by the two beam splitters (BS1 and BS2), reflected by the reference segment and transmitted back by the second beam splitter (BS2) and reflected in the first beam splitter (BS1) that is focused on one detector per target, in order to be able to measure the absolute value of inclination in two axes (tip and tilt).

## Patentansprüche

1. Berührungsloses optisches Messsystem zur gleichzeitigen Messung des relativen Kolbens und der relativen Neigung in zwei Achsen (Tip und Tilt) zwischen zwei reflektierenden Oberflächen, basierend auf der Verwendung eines modifizierten Mach-Zehnder-Interferometers, das auf zwei benachbarte, nahezu koplanare Spiegel (RS) und (TS) gerichtet ist, wobei zwei Lichtstrahlen entlang zweier unterschiedlicher optischer Wege verlaufen, bis sie in einer Interferogramm-Bildebene (IIP) zusammenlaufen, um ein Interferenzmuster zu bilden, umfassend einen teilweise kohärenten Lichtstrahl (LS), der nach dem Auftreffen auf einen ersten Strahlteiler (BS1) die beiden Lichtstrahlen (TP, RP) bildet, die zwei unterschiedliche Wegen nehmen:
- einen ersten Lichtstrahl (RP), der zu einem zweiten Strahlteiler (BS2) weitergeleitet wird, der mit dem vorherigen (BS1) fluchtet, der den interessierenden Bereich des Referenzsegments P (RS) beleuchtet, während ein weiterer, durch das Referenzsegment (RS) reflektierter Strahl in dem zweiten Strahlteiler (BS2) zu einem dritten Strahlteiler (BS3) reflektiert wird, von wo aus er durch einen vierten Strahlteiler zu einem Bildaufnahmesystem (MD) weitergeleitet wird, und
- einen zweiten Lichtstrahl (TP), der durch den Strahlteiler (BS1) zu dem vierten Strahlteiler (BS4) reflektiert wird und von diesem durch den dritten Strahlteiler (BS3) weitergeleitet wird, um das Zielspiegelsegment (TS) zu beleuchten, das ihn wiederum reflektiert und über die Strahlteiler (BS3) und (BS4) an dasselbe Bildaufnahmesystem (MD) weiterleitet, das die Interferenz zwischen den beiden Strahlen (TP, RP) erfasst;
**wobei:**
- ein optisches Bauteil (DP) in den Zielarm eingefügt ist, durch den der Strahl (TP) hindurchgeht, wodurch eine lineare optische Wegdifferenz (Messneigung (auf Englisch "Measurement Tilt")) zwischen den beiden Armen des Interferometers entsteht; und
- eine Kompensationsplatte (CP) in den Referenzarm eingefügt ist, gefolgt von dem Strahl (RP), sodass der Phasengradient im Licht ausschließlich auf die durch das optische Bauteil (DP) verursachte Änderung des optischen Weges zurückzuführen ist;
Mechanismen, die ein festes Interferenzmuster erzeugen, das durch eine Amplitudenhüllkurve moduliert wird, in der nur die Streifen in der Nähe des Bereichs sichtbar sind, in dem die optische Wegdifferenz in den beiden Armen des Interferometers Null ist; wenn das Interferenzmuster in eine Kamera (MD) projiziert wird, werden die drei gemessenen Größen entkoppelt, sodass sie durch einfache morphologische Operationen extrahiert und wie folgt dargestellt werden:
• der relative Kolben durch die Position der Hüllkurve des Interferenzmusters,
• die Neigung in einer Achse (Tip) durch die Dicke der Streifen und daher aus der Breite des Modulationsmusters gemessen werden kann, und
• die Neigung in der anderen Achse (Tilt) durch die Neigung der Streifen.

2. System gemäß Anspruch 1, wobei das optische Bauteil, das die optische Wegdifferenz (DP) erzeugt, ein Doppelprisma ist, das aus zwei Gläsern mit unterschiedlichen, aber nahe beieinander liegenden Brechungsindizes aufgebaut ist.

3. System gemäß Anspruch 1, wobei das optische Bauteil, das die optische Wegdifferenz (DP) erzeugt, ein Keilprisma ist.

4. System gemäß Anspruch 1, wobei der Effekt des optischen Bauteils, das die optische Wegdifferenz (DP) erzeugt, durch die leichte Neigung eines oder mehrerer der Strahlteiler (BS1 bis BS4) erzeugt wird.

5. System gemäß einem der vorhergehenden Ansprüche, wobei die durch das in dem Zielarm befindliche optische Bauteil (DP) induzierte optische Wegdifferenz eine Verschiebung der Streifen bewirkt, die proportional zur Verschiebung des in dem System zwischen der Ziel- und der Referenzoberfläche vorhandenen Kolbens ist.

6. System gemäß einem der vorhergehenden Ansprüche, wobei die Messauflösungswerte eine Funktion des Kohärenzgrades der verwendeten Lichtquelle sind.

7. System gemäß einem der vorhergehenden Ansprüche, wobei die Kompensationsplatte (CP) in mehreren verschiedenen Bereichen eine abgestufte Konfiguration aufweist, die zwischen den Bereichen einen konstanten Wegdifferenzsprung bewirkt, um in dem Detektor mehrere korrelative Kolbenmesszonen zu schaffen, wodurch in dem Detektor verschiedene Messzonen erzeugt werden.

8. System gemäß Anspruch 6, wobei die Dicke *"di"* jedes Bereichs so angeordnet ist, dass alle möglichen Kolbenwerte in einem Bereich des Bildes sichtbar sind.

9. System gemäß den Ansprüchen 6-7, wobei zwischen benachbarten Bereichen ein gewisses Maß an relativer Kolbenüberlappung vorhanden ist, um sicherzustellen, dass an den Rändern des Feldes kein Kolbenwert aufgrund von Toleranzen oder aus anderen Gründen ausgelassen wird.

10. System gemäß den Ansprüchen 6-8, wobei das Endergebnis ein Bild mit unterschiedlichen horizontalen Bändern entlang der X-Richtung ist, bei dem der Kolbenwert den Bereich OPD=0 und anschließend das Interferenzmuster linear verschiebt.

11. System gemäß einem der vorhergehenden Ansprüche, **dadurch gekennzeichnet, dass** es einen Neigungssensor (SC) in das Interferometer integriert, der das durch die beiden Strahlteiler (BS1 und BS2) weitergeleitete Licht nutzt, das durch das Referenzsegment reflektiert und durch den zweiten Strahlteiler (BS2) zurückgeleitet sowie in dem ersten Strahlteiler (BS1) reflektiert wird, der auf einen Detektor pro Zielobjekt fokussiert ist, um den absoluten Neigungswert in zwei Achsen (Tip und Tilt) messen zu können.

## Revendications

1. Système de métrologie optique sans contact pour mesurer simultanément le piston relatif et l'inclinaison relative selon deux axes (tip et tilt) entre deux surfaces réfléchissantes en se basant sur l'utilisation d'un interféromètre de Mach-Zehnder modifié pointant vers deux miroirs presque coplanaires (RS) et (TS) adjacents, avec deux faisceaux lumineux se déplaçant le long de deux chemins optiques différents jusqu'à converger dans un plan image d'interférogramme (IIP) pour former une figure d'interférence, comprenant un faisceau lumineux partiellement cohérent (LS) qui forme les deux faisceaux lumineux (TP, RP) se propageant selon deux chemins différents après avoir touché un premier séparateur de faisceau (BS1) :
- un premier faisceau lumineux (RP) qui est transmis vers un deuxième séparateur de faisceau (BS2), aligné avec le précédent (BS1) qui éclaire la zone d'intérêt du segment de référence P (RS), tandis qu'un autre faisceau réfléchi par le segment de référence (RS) est réfléchi dans ledit deuxième séparateur de faisceau (BS2) vers un troisième séparateur de faisceau (BS3), d'où il est transmis à travers un quatrième séparateur de faisceau à un système de capture d'image (MD), et
- un deuxième faisceau lumineux (TP) qui est réfléchi par le séparateur de faisceau (BS1) vers le quatrième séparateur de faisceau (BS4) et de là il est transmis par le troisième séparateur de faisceau (BS3) pour éclairer le segment de miroir cible (TS), qui à son tour le réfléchit et le transmet à travers les séparateurs de faisceau (BS3) et (BS4) vers le même système de capture d'image (MD) qui capture l'interférence entre les deux faisceaux (TP, RP) ;
**dans lequel :**
- un composant optique (DP) est interposé dans le bras cible à travers lequel passe le faisceau (TP), ce qui crée une différence de chemin optique linéaire (inclinaison de mesure) entre les deux bras de l'interféromètre ; et
- une plaque de compensation (CP) est interposée dans le bras de référence suivi par le faisceau (RP) de sorte que le gradient de phase dans la lumière est dû uniquement à la modification du chemin optique introduite par le composant optique (DP) ;
des mécanismes qui génèrent une figure d'interférence fixe modulée par une enveloppe d'amplitude, dans laquelle seules les franges proches de la région dans laquelle la différence de chemin optique dans les deux bras de l'interféromètre est égale à zéro, seront visibles ; lors de la projection de ladite figure d'interférence dans une caméra (MD), les trois grandeurs mesurées sont découplées, de sorte qu'elles sont extraites par de simples opérations morphologiques et représentées par :
• le piston relatif par la position de l'enveloppe de la figure d'interférence,
• l'inclinaison selon un axe (tip) par l'épaisseur des franges et peut donc être mesurée à partir de la largeur du motif de modulation, et
• l'inclinaison selon l'autre axe (tilt) par l'inclinaison des franges.

2. Système selon la revendication 1, dans lequel le composant optique qui génère la différence de chemin optique (DP) est un double prisme, constitué de deux verres d'indices de réfraction différents mais proches.

3. Système selon la revendication 1, dans lequel le composant optique qui génère la différence de chemin optique (DP) est un prisme en coin.

4. Système selon la revendication 1, dans lequel l'effet du composant optique qui génère la différence de chemin optique (DP) est généré par la légère inclinaison d'un ou plusieurs des séparateurs de faisceau (BS1 à BS4).

5. Système selon l'une quelconque des revendications précédentes, dans lequel la différence de chemin optique induite par le composant optique (DP) situé dans le bras cible produit un déplacement des franges proportionnel au déplacement du piston présent dans le système entre les surfaces cible et de référence.

6. Système selon l'une quelconque des revendications précédentes, dans lequel les valeurs de résolution de mesure sont fonction du degré de cohérence de la source lumineuse utilisée.

7. Système selon l'une quelconque des revendications précédentes, dans lequel la plaque de compensation (CP) a une configuration étagée dans plusieurs régions différentes qui introduisent un saut de différence de chemin constant entre lesdites régions, afin d'établir plusieurs zones de mesure de piston corrélatives dans le détecteur, générant différentes zones de mesure dans le détecteur.

8. Système selon la revendication 6, dans lequel l'épaisseur *« di »* de chaque région est agencée de telle sorte que toutes les valeurs de piston possibles sont visibles dans une certaine région de l'image.

9. Système selon les revendications 6 à 7, dans lequel il existe un certain degré de chevauchement du piston relatif entre des régions voisines pour garantir qu'aucune valeur de piston n'est omise en raison de tolérances ou d'autres raisons aux bords du champ.

10. Système selon les revendications 6 à 8, dans lequel le résultat final est une image avec différentes bandes horizontales le long de la direction X où la valeur de piston déplace linéairement la région OPD=0 et par la suite la figure d'interférence.

11. Système selon l'une quelconque des revendications précédentes, **caractérisé en ce qu'**il intègre un capteur d'inclinaison (SC) dans l'interféromètre qui utilise la lumière transmise par les deux séparateurs de faisceau (BS1 et BS2), réfléchie par le segment de référence et retransmise par le deuxième séparateur de faisceau (BS2) et réfléchie dans le premier séparateur de faisceau (BS1) qui est focalisée sur un détecteur par cible, afin de pouvoir mesurer la valeur absolue de l'inclinaison dans deux axes (tip et tilt).
